# EUROPEAN PATENT APPLICATION

(11) **EP 4 647 374 A1**
(43) Date of publication of application: **12.11.2025**
(21) Application number: 24175136.1
(22) Date of filing: 10.05.2024
(51) Int. Cl.: B65G 54/02, B65G 15/00

(54) **METHOD AND TRANSPORT SYSTEM FOR DETERMINING THE POSITION OF A SHUTTLE**

(71) Applicant: ABB Schweiz AG, 5400 Baden (CH)
(72) Inventor: Almeder, Alexander, 3910 Zwettl (AT); Herbst, Michael, 5164 Seeham (AT)
(74) Representative: Patentanwälte Pinter & Weiss OG

(57) **Abstract**

To provide a method and an improved transport system (1), wherein the position determination of at least one shuttle (11) of the transport system (1) is enabled across different types of conveyors, a conveyor sensor unit (13) is provided in a conveying unit (3), in that the at least one shuttle (11) is handed over from an effective area (E3) of the conveyor unit (3) to a magnetic effective area (E2) of an electromagnetic transport unit (2) or vice versa, wherein during handing over the at least one shuttle (11), the at least one shuttle (11) is at least temporarily in the effective area (E3) of the conveyor unit (3) and in the magnetic effective area (E2) of the electromagnetic transport unit (2), wherein the position of the at least one shuttle (11) is determined by the conveyor sensor unit (13) or by the electromagnetic transport unit (2) and in that when the at least one shuttle (11) is just in the effective area (E3) of the conveyor unit (3), the position of the at least one shuttle (11) in the effective area (E3) of the conveyor unit (3) is determined by the conveyor sensor unit (13).

## Description

### Technical Field of the invention

The present invention pertains to a method for determining the position of at least one shuttle of a transport system comprising an electromagnetic transport unit and a conveyor unit, wherein the electromagnetic transport unit interacts with the at least one shuttle in an magnetic effective area of the electromagnetic transport unit in order to move the at least one shuttle in said magnetic effective area, wherein the position of the at least one shuttle in the magnetic effective area of the electromagnetic transport unit is determined by the electromagnetic transport unit, wherein the conveyor unit interacts with the at least one shuttle in an effective area of the conveyor unit in order to move the at least one shuttle in said effective area. The present invention further pertains to a transport system.

### Description of the Prior Art

Rapid growth in product processing industries, like food and beverage, call for more efficient and flexible product transport systems to increase product flow and to minimize manual labor. To satisfy the needs of those industries, different transport systems are known, wherein especially conventional continuous conveyors are commonly used.

Conventional continuous conveyors are typically conveyor belts in which a rotary movement of an electric drive unit is converted into a linear movement of a circulating conveying means, like a conveyor belt, on which the aforementioned products are moved. The flexibility of conventional continuous conveyors is usually considerably limited, in particular the individual transportation of individual products is usually not possible. In order to remedy this and to meet the requirements of modern and flexible product transport systems, electromagnetic transport units are increasingly being used in modern production technology, such as linear motors, like long stator linear motors (LLM) or short stator linear motors (SLM), and planar motors (PM), in which the products to be transported are moved by a number of shuttles.

The applications and operations of linear motors are well known from the prior art. A linear motor generally consists of a stator and at least one shuttle, which is used to transport a component, a package or other products in the aforementioned case of a transport system. As described in US 6,876,107 B2, an LLM stator is usually composed of a plurality of stator segments, with a number of drive coils being arranged in a fixed position next to one another on the stator or on the stator segments. The stator segments can have different geometries, such as straight lines, curves and diverters, and can be arranged in different variants to form the desired LLM statorgeometry. The LLM stator forms a magnetic effective area (conveyor section) along which one or more shuttles can be moved. The shuttles are held and guided in the magnetic area.

PM are also known from the prior art. For example, US 9,202,719 B2 discloses the basic structure and basic mode of operation of a PM. A PM essentially also has a stator which, in contrast to an LLM, forms a transport plane as the magnetic effective area in which one or more shuttles can be moved at least two-dimensionally. In PMs, drive coils are usually arranged in the transport plane, in some designs also in several planes.

In order to enable a controlled movement of a shuttle for transporting a part or component in PM or LLM and subsequently regulate and/or control it, drive magnets (permanent or electromagnets) are provided on a shuttle in addition to the drive coils installed on the stator, and position sensors (like AMR sensors, Hall elements, etc.) are provided on the stator. By controlling the energization of the drive coils, a moving electromagnetic field, a so-called electromagnetic drive field, can be generated, which interacts with the drive magnets of the shuttle to move the shuttle. In a known manner, the drive coils are controlled in particular by means of control units provided for this purpose, in order to apply corresponding coil voltages to the drive coils to generate a drive electromagnetic field. Drive coils that are controlled and therefore energized for the purpose of generating an electromagnetic field are referred to in particular as "active" drive coils. In order to move a shuttle along a stator, usually only some of the drive coils in the region of the shuttle are energized. The interaction of the electromagnetic drive field and the magnetic field of the drive magnets of the shuttle produces a thrust force (possibly also in different directions), that move the shuttle in the desired direction.

In a short stator linear motor, the drive coils are arranged in the shuttle and the drive magnets are arranged along the stator.

Further explanations of LLM and PM as well as a variety of design options for LLM and PM can be found in WO 2013/143783 A1, US 6,876,107 B2 or US 2013/0074724 A1, among others, so that no further implementation details of these drive forms will be discussed here.

Arrangements of transport systems are also known in which various low-cost conveyor units, such as the continuous conveyors mentioned at the beginning in the form of conveyor belts, are combined with high-cost electromagnetic transport units, like linear motor and/or PM in order to be able to reduce the overall costs and complexity of the transport system. For example, shuttles transporting parts or components are moved with a linear motor or PM in an area of the transport system where high accuracy of movement is required, for example in process stations, or where the shuttles need to be moved independently from each other. The shuttles are however preferably moved with a continuous conveyor, for example, where there is no need for a high accuracy of the movement. Using different types of conveyors requires a hand over of the shuttle between the different conveyor types in order to achieve a continuous movement of the shuttle and furthermore, a continuous process flow.

For overlooking the process flow on the transport system, it is imperative to know the positions of all shuttles in the transport system. The positions are, for example, used by a control unit of the linear motor for controlling movement of the shuttle along the magnetic effective area of the linear motor. However, when the shuttle is handed over between different conveyor types, the observability of the position of a shuttle can get lost.

For example, the position of the shuttle can be determined by the position sensors of the stator when said shuttle is in a magnetic effective area of the electromagnetic transport unit (e.g., of an LLM). But if the shuttle is not present in the magnetic effective area, e.g., when the shuttle is conveyed by a continuous conveyer, the position of the shuttle is not determined and observability gets lost.

Due to the loss of the observability of the shuttle along the transport system certain shuttle parameters like wear, shuttle runtime, etc., cannot be determined. Furthermore, if the observability of the shuttle gets lost and an error in operating the shuttle, e.g., a stall of the shuttle along the continuous conveyor occurs, said error stays unrecognized.

One way to avoid such loss of observability is to use only high-cost electromagnetic transport units along the transport system instead of low-cost conventional conveyors, which is not satisfying because in turn the cost of the transport system increases substantially.

### Summary of the Invention

It is therefore an object of the present invention to provide a method and an improved transport system, wherein the position determination of at least one shuttle of the transport system is enabled across different types of conveyors.

This object is achieved with the features of the independent claims. According to the invention a conveyor sensor unit is provided for the conveying unit, in that the at least one shuttle is handed over from the effective area of the conveyor unit to the magnetic effective area of the electromagnetic transport unit or vice versa, wherein during handing over the at least one shuttle, the at least one shuttle is at least temporarily in the effective area of the conveyor unit and in the magnetic effective area of the electromagnetic transport unit, wherein the position of the at least one shuttle is determined by the conveyor sensor unit or by the electromagnetic transport unit in that when the at least one shuttle is just in the effective area of the conveyor unit, the position of the at least one shuttle in the effective area of the conveyor unit is determined by the conveyor sensor unit and in that the determined position of the at least one shuttle is received and used by a control unit of the transport system to observe said shuttle across the transport system. Preferably the electromagnetic transport unit moves the at least one shuttle to the effective area of the conveyor unit or the conveying unit moves the at least one shuttle to the magnetic effective area of the electromagnetic transport unit in order to hand over the at least one shuttle. By adding the conveyor sensor unit in the conveyor unit, it is possible to determine the position of the shuttle also on the conveyor unit and during hand over between different conveyor types. Hence, the observability is enabled across different types of conveyors of the transport system, especially in arrangements of the transport system wherein low-cost conveyor units, such as the continuous conveyors in the form of conveyor belts, are combined with high-cost electromagnetic transport units, like linear motor and/or planar motor, in order to combine long range capability of the conveyor units with high precision of the electromagnetic transport unit at rather low cost, compared to a transport system comprising just electromagnetic transport units. Furthermore, shuttle parameters like shuttle milage, wear, shuttle runtime, etc., can be determined accurately, which helps to improve the operation of the transport system. Preferably the position of the at least one shuttle in the magnetic effective area is determined with a stator sensor unit of the electromagnetic transport unit that measures the position of the at least one shuttle in said magnetic effective area. Alternatively, a movement of the at least one shuttle in the magnetic effective area is controlled by the control unit of the transport system in that, for controlling the movement, the control unit receives a position setpoint value and position actual value and calculates a value of a manipulated variable from the difference between the position setpoint value and the position actual value, wherein the calculated manipulated variable is used to control the electromagnetic transport unit and in that the position setpoint value for the at least one shuttle in the magnetic effective area is used as the position of the at least one shuttle in said magnetic effective area. Depending on the specific application of the electromagnetic transport unit, different ways are possible to determine the position of the at least one shuttle in the magnetic effective area. Usually, stator sensors are comprised in the electromagnetic transport unit, hence, no additional hardware is necessary. For example, the stator sensors are fused in the stator of the electromagnetic transport unit.

Preferably, a movement of at least one shuttle in the magnetic effective area of the electromagnetic transport unit is controlled by the control unit depending on the determined position of at least one shuttle in the effective area of the conveyor unit. In that way the movement trajectories of shuttles present in the magnetic effective area of the electromagnetic transport unit can be adapted before a (new) shuttle is handed over from the conveyor unit to the magnetic effective area. Advantageously, collision of present shuttles in the magnetic effective area and handed over shuttles can be avoided and efficiency of the transport system can be increased.

According to the invention a transport system is provided, wherein a conveyor sensor unit is provided in the conveying unit, wherein the transport system is arranged to hand over the at least one shuttle from the effective area of the conveyor unit to the magnetic effective area of the electromagnetic transport unit or vice versa, wherein during handing over the at least one shuttle, the at least one shuttle at least temporarily adapts a hand over position in which the at least one shuttle is partly in the effective area of the conveyor unit and partly in the magnetic effective area of the electromagnetic transport unit, wherein the position of the at least one shuttle is determined in the hand over position by the conveyor sensor unit or by the electromagnetic transport unit, wherein when the at least one shuttle is just in the effective area of the conveyor unit, the position of the at least one shuttle in the effective area of the conveyor unit is determined by the conveyor sensor unit and wherein a control unit of the transport system is designed to receive and use the determined position of the at least one shuttle in order to observe said shuttle across the transport system. Preferably the electromagnetic transport unit is provided to move the at least one shuttle to the effective area of the conveyor unit or the conveying unit is provided to move the at least one shuttle to the magnetic effective area of the electromagnetic transport unit, in order to hand over the at least one shuttle. Therefore, the observability of the at least one shuttle across the different types of conveyors of the transport system is enabled in an efficient way and certain shuttle parameters as well as operation errors of the shuttle can be determined accurately.

In a preferred embodiment of the transport system, the electromagnetic transport unit is designed as long stator linear motor or a short stator linear motor or planar motor, wherein the electromagnetic transport unit comprises a stator, which forms the magnetic effective area of the electromagnetic transport unit to move the at least one shuttle.

In another preferred embodiment of the transport system, the conveyor unit is designed as continuous conveyor, preferably as conveyor belt or chain conveyor, wherein the conveyor unit comprises a circulating conveying means, which forms the effective area of the conveyor unit to move the at least one shuttle.

### Brief Description of the Drawings

The present invention is described in greater detail in the following with reference to Fig. 1 to 3, which show exemplary, schematic and non-limiting advantageous embodiments of the invention. In the drawings:
Fig. 1 shows the basic components of a transport system,
Fig. 2 shows a hand over position between an electromagnetic transport unit and a conveyor unit of the transport system,
Fig. 3 shows a hand over position viewed from above.

### Detailed Description of the Drawings

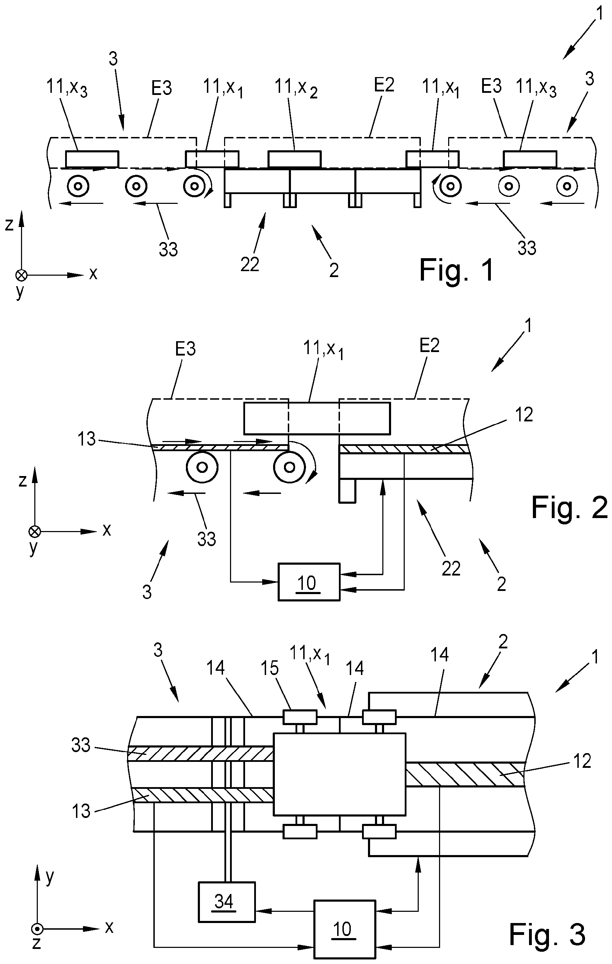

Fig. 1 shows an exemplarily embodiment of a transport system 1 according to the invention in a horizontal arrangement in a sideview. The transport system 1 comprises at least one electromagnetic transport unit 2 and at least one conveyor unit 3. The electromagnetic transport unit 2 is preferably designed as a long stator linear motor (as exemplarily shown in the figures), a short stator linear motor, a planar motor or similar. The conveyor unit 3 is preferably designed as a continuous conveyor, e.g., as a conveyor belt, a chain conveyor (as exemplarily shown in the figures) or similar. However, different types of electromagnetic transport units 2 and conveyor units 3 can be provided and combined in the transport system 1.

In Fig. 1 the transport system 1 exemplarily comprises one electromagnetic transport unit 2 and two conveyor units 3, wherein the electromagnetic transport unit 2 and the conveyor units 3 are merely shown schematically. Furthermore, the two conveyor units 3 are only shown partly. However, depending on the application, the transport system 1 can be designed in various ways and can comprise a plurality of electromagnetic transport units 2 as well as more than two conveyor units 3 in different arrangements that work together to form a transport track along which a shuttle 11 can be moved. This enables a flexible arrangement of the transport system 1.

The transport system 1 further comprises at least one shuttle 11. To describe the invention in a simple manner, only one shuttle 11 in different positions along the components of the transport system 1 is shown in the figures. Of course, more than one shuttle 11 can be moved along the transport system 1. In the following the at least one shuttle 11 is referred to as the shuttle 11. The shuttle 11 is shown as being rectangular in the figures, of course the shape of the shuttle 11 is not limited to being rectangular.

The shuttle 11 is designed to transport an item, for example, one or more products, packages, components, etc., along the transport system 1. Therefore, the item can be arranged on the shuttle 11 (not shown in the figures) or held with a gripper on the shuttle 11 or arranged in a receptacle on the shuttle 11, for example. The shuttle 11 is further designed to be moved by the electromagnetic transport unit 2 and by the conveying unit 3, as well as being handed over from the electromagnetic transport unit 2 to the conveying unit 3 or vice versa, as will be described in more detail in the following.

The electromagnetic transport unit 2 comprises a stator 22, which forms a magnetic effective area E2 of the electromagnetic transport unit 2. The electromagnetic transport unit 2 is provided to interact with the shuttle 11 in said magnetic effective area E2 in order to move the shuttle 11 in said magnetic effective area E2 when the transport system 1 is operated. Therefore, a number of drive coils (long stator linear motor) or a number of drive magnets (short stator linear motor) can be arranged in a fixed position next to one another on the stator 22 (not shown in the figures). As mentioned at the beginning, the number of drive coils or drive magnets interact in a known manner with the shuttle 11, in particular with drive magnets (permanent or electromagnets) or drive coils (short stator linear motor) of the shuttle 11, in said magnetic effective area E2. The magnetic effective area E2 is merely indicated exemplarily in the figures as being encompassed with a dashed line. In an equally well-known manner, in applying coil voltages to the drive coils to generate an electromagnetic drive field and in interacting of said electromagnetic drive field with a magnetic field of the drive magnets a thrust force (possibly also in different directions) is produced, that moves the shuttle 11 in the desired direction in the magnetic effective area E2, e.g., in longitudinal direction along the stator 2.

A control unit 10 of the transport system 1 is provided in order to control said coil voltages applied to the drive coils and therefore the movement of the shuttle 11 in the magnetic effective area E2. For example, the control unit 10 is designed as microprocessor-based hardware, like as a microcontroller. Alternatively, the control unit 10 of the transport system 1 can comprise separate controllers, which control the operation of the electromagnetic transport unit 2 and/or of the conveyor unit 3. In the following the invention is described with the one control unit 10 of the transport system 1, wherein the control unit 10 is used to control the operation of the electromagnetic transport unit 2 and of the conveyor unit 3. Furthermore, using one control unit enables fleet management of the shuttles 11 of the transport system.

Depending on the type of electromagnetic transport unit 2 used, the magnetic effective area E2 can be designed as being one dimensional, for example, in case of a long stator linear motor (as shown in the figures) or in case of a short stator linear motor. The term "being one dimensional" means in this context that the shuttle 11 can be moved in the magnetic effective area E2 in one direction, for example, as shown in Fig. 1 in x-direction or along a given path along the stator 2. But the magnetic effective area E2 can also be designed more dimensional, e.g., in case of a planar motor, wherein the stator forms a transport plane as the magnetic effective area E2. In this case the shuttle 11 can be moved, for example, in x- and y-direction, and possibly also in z-direction.

If more than one shuttle 11 is present in the magnetic effective area E2 of the electromagnetic transport unit 2, each of the shuttles 11 can be controlled individually (speed, acceleration, trajectory), preferably by the control unit 10, wherein possible collisions are avoided. Since the basic principles of a long stator linear motor are sufficiently well known, e.g. from US 6,876,107 B2 or from EP 3 109 998 B1, further long stator linear motor related details will not be discussed here.

As indicated in Fig. 1, the stator 22 of the electromagnetic transport unit 2 can be composed of a plurality of stator segments. The stator segments can have different geometries, such as straight lines, curves and diverters, and can be arranged in different variants to form the desired stator 22. As mentioned at the beginning, a short stator linear motor is designed in a different way, wherein the drive coils are arranged in the shuttle 11 and the drive magnets are arranged along the stator 22.

The conveyor unit 3 is provided to interact with the shuttle 11 in an effective area E3 of the conveyor unit 3 in order to move the shuttle 11 in said effective area E3 when the transport system 1 is operated. The effective area E3 is merely indicated exemplarily in the figures as being encompassed with a dashed line. The conveyor unit 3 is preferably designed as continuous conveyor, preferably, but not excluding, as conveyor belt or chain conveyor (as schematically indicated in the figures), wherein the conveyor unit 3 comprises a circulating conveying means 33. The conveying means 33 forms the effective area E3 of the conveyor unit 3 to move the shuttle 11.

Furthermore, the conveying means 33 preferably comprises a number of conveying elements (not shown in the figures), which can interact with the shuttle 11 in order to move the shuttle 11. For example, the conveying elements can be designed as hooks, which interlock with the shuttle 11 present in the effective area E3 of the conveyor unit 3, or as drive fingers, for example. Furthermore, the conveying elements can be designed to interlock with the shuttle 11 via magnetic forces.

The conveying unit 3 and/or the electromagnetic transport unit 2 may comprise guide means 14 (only shown in Fig. 3), like guide rails, to additionally guide the shuttle 11 along the effective area E3 of the conveying unit 3 and/or the magnetic effective area E2 of the electromagnetic transport unit 2. Furthermore, as shown in Fig. 3, the guide means 14 preferably extend between the effective area E3 and the magnetic effective area E2, to enable handing over the shuttle 11, as will be described in the following. The shuttle 11 preferably comprises rollers 15 (only shown in Fig. 3), which can interact with said guide means 14.

Preferably, the conveyor unit 3 comprises a drive unit 34, which is designed to drive the conveying means 33 in order to move the shuttle 11 in the effective area E3. Therefore, as schematically shown in Fig. 3, the drive unit 34 may be attached to a pulley of the conveyor unit 3 (e.g., via a gearbox) to drive the conveying means 33. For example, the drive unit 34 is an electric motor, e.g., a DC motor or similar. The drive unit 34 can be controlled, for example, by the control unit 10 of the transport system 1. For example, the control unit 10 uses one or a combination of the shuttles' position provided by the conveyer sensor unit 13. Therefore, as shown in Fig. 3, the control unit 10 is connected via a suitable connection to the drive unit 34. The control unit 10 may regulate the conveying speed of the conveying means 33 in that the rotational speed of the drive unit 34 is controlled. In Fig. 3 the control unit 10 is only indicated schematically. Of course, the invention is not limited to actively driven types of continuous conveyors. Also passively driven continuous conveyors can be used, for example, wherein the shuttle 11 is moved by gravity.

The electromagnetic transport unit 2 is designed to determine a position x₂ of the shuttle 11 in the magnetic effective area E2 of the electromagnetic transport unit 2. The position x₂ of the shuttle 11 in the magnetic effective area E2 is preferably determined with a stator sensor unit 12 of the electromagnetic transport unit 2 that measures the position x₂ of the shuttle 11 in said magnetic effective area E2. The position x₂ of the shuttle 11 can be determined relative to a reference point of the electromagnetic transport unit 2. For example, in case of the long stator linear motor, the position x₂ of the shuttle 11 is determined in x-direction relative to a reference point of the stator 22. In case of a planar motor, the position of the shuttle 11 in the magnetic effective area E2 can be determined in x- and y- direction relative to a reference point of the electromagnetic transport unit 2. As shown in Fig. 2 and Fig. 3, the stator 22 preferably comprises the stator sensor unit 12. The stator sensor unit 12 is merely shown schematically in said figures as a hatched rectangular to indicate the measurement area in the magnetic effective area E2.

The stator sensor unit 12 comprises at least one position sensor, like an AMR position sensor (anisotropic magnetoresistance-based sensor), Hall sensor, magneto-strictive sensor or similar. The stator sensor unit 12 can of course comprise a number of position sensors arranged along the stator 22 in the magnetic effective area E2. In this context, however, it should be noted that the present invention is by no means limited to the use of sensors detecting a magnetic field, but that optical sensors or capacitive sensors can also be used as position sensors for the stator sensor unit 12. Usually, those types of position sensors are already installed in the stator 22.

The control unit 10 of the transport system 1 is designed to receive the measured position of the shuttle 11 in the magnetic effective area E2 by the stator sensor unit 12. Therefore, as exemplarily shown in Fig. 2 and Fig. 3, the stator sensor unit 12 is connected to the control unit 10 via a suitable connection, like a wired or wireless connection.

Alternatively, as the movement of the shuttle 11 in the magnetic effective area E2 of the electromagnetic transport unit 2 is controlled by the control unit 10 of the transport system 1, the control unit 10 receives a position setpoint value and position actual value and calculates a value of a manipulated variable from the difference between the position setpoint value and the position actual value. The calculated manipulated variable is used to control the electromagnetic transport unit 2. The position setpoint value for the shuttle 11 in the magnetic effective area E2 can be used as the position x₂ of the shuttle 11 in said magnetic effective area E2.

To enable a consistent determination of the position x₂ of the shuttle 11 in the magnetic effective area E2, said position is preferably determined periodically with a given sample rate. The time between two measurements by the stator sensor unit 12 or between two calculations of the manipulated variable by the control unit 10 can be chosen appropriately. For example, the sample rate can be chosen dependent on the movement speed of the shuttle 11 in the magnetic effective area E2.

As already discussed at the beginning of the description, when the shuttle 11 is not present in the magnetic effective area E2 of the electromagnetic transport unit 2, the position of the shuttle 11 is not determined by the electromagnetic transport unit 2 anymore. In order to avoid losing the observability of the shuttle 11, according to the invention, a conveyor sensor unit 13 is provided in the conveying unit 3. The conveyor sensor unit 13 is designed to determine a position x₃ of the shuttle 11 in the effective area E3 of the conveyor unit 3. The position x₃ of the shuttle 11 can be determined relative to a reference point of the conveyor unit 3.

The conveyor sensor unit 13 comprises at least one position sensor, like an AMR sensor or similar. The conveyor sensor unit 13 can of course comprise a number of position sensors arranged along the conveying means 33 in the effective area E3 of the conveyor unit 3. As shown in Fig. 2 and Fig. 3, the conveyor sensor unit 13 can be arranged underneath (in z-direction) and beside (in y-direction) the conveying means 33. Of course, the conveyor sensor unit 13 may be arranged above said conveying means 33. The conveyor sensor unit 13 is merely shown schematically in said figures as a hatched rectangular to indicate the measurement area in the effective area E3.

It should be again noted that the present invention is by no means limited to the use of AMR position sensors, and that Hall sensors, optical sensors or capacitive sensors can also be used as position sensors. However, these are just examples of position sensors, a person skilled in the art could foresee other applicable position sensors for the conveyor sensor unit 13 as well as for the stator sensor unit 12 to measure the position of the shuttle 11. It highly depends on the circumstances of the application, which position sensors are most practical. The stator sensor unit 12 and the conveyor sensor unit 13 may be designed as the same type of position sensor.

Alternatively, if the conveyor unit 3 comprises the drive unit 34 and the drive unit 34 is controlled by the control unit 10, the control unit 10 receives a rotational speed setpoint value and a rotational speed actual value from the drive unit 34. Furthermore, as the position x₃ of the shuttle 11 in the effective area E3 is determined by the conveyor sensor unit 13, the control unit 10 receives said position as well. The control unit 10 is preferably designed to extrapolate the determined position x₃ of the shuttle 11 in the effective area E3 with the actual rotational speed of the drive unit 34 to determine the position x₃ of the shuttle 11 for at least one following time step. In this way, the number of position sensors as the conveyor sensor unit 13 in the effective area E3 of the conveyor unit 3 can be reduced, wherein the cost of the conveyor unit 3 can be reduced. Alternatively or additionally, the control unit 10 can also be designed to interpolate positions of the shuttle 11 between two known positions.

In the following, an exemplary position determination of the shuttle 11 according to the invention is described as the shuttle 11 is moved along the different types of conveyors of the transport system shown in Fig. 1. For a simple explanation of the invention, in Fig. 1 the conveying direction of the shuttle 11 across the transport system 1 is exemplarily indicated merely in positive x-direction. As the shuttle 11 is in the effective area E3 of the conveying unit 3, the position x₃ of the shuttle 11 in the effective area E3 is determined by the conveyor sensor unit 13. The transport system 1 is arranged to hand over the shuttle 11 from the effective area E3 of the conveyor unit 3 to the magnetic effective area E2 of the electromagnetic transport unit 2 or vice versa. Therefore, the electromagnetic transport unit 2 is preferably provided to move the at least one shuttle 11 to the effective area E3 of the conveyor unit 3 or the conveying unit 3 is provided to move the at least one shuttle 11 to the magnetic effective area E2 of the electromagnetic transport unit 2. For example, as shown in Fig. 1, the conveyor unit 3 conveys the shuttle 11 at least partially out of the effective area E3 and at least partially into the magnetic effective area E2, wherein the electromagnetic transport unit 2 takes over the shuttle 11, in that the shuttle 11 is further conveyed in the magnetic effective area E2. Alternatively, a manipulator (e.g., a robot, robotic arm, a delta robot, etc) may be provided in the transport system 1 to move the at least one shuttle 11 from the effective area E3 of the conveyor unit 3 to the magnetic effective area E2 of the electromagnetic transport unit 2 or vice versa.

During handing over the shuttle 11, the shuttle 11 at least temporarily adapts a hand over position x₁, wherein the shuttle 11 is at least temporarily in the effective area E3 of the conveyor unit 3 and in the magnetic effective area E2 of the electromagnetic transport unit 2, as shown in the figures. The hand over position x₁ of the shuttle 11 is determined by the conveyor sensor unit 13 or by the electromagnetic transport unit 2. Alternatively, the hand over position x₁ of the shuttle 11 is determined by using both the conveyor sensor unit 13 and the electromagnetic transport unit 2, in that an appropriate weighting approach of the conveyor sensor unit 13 and the electromagnetic transport unit 2 is used. For example, each measured position is provided with a predefined weighting factor to approximate the hand over position x₁ of the shuttle 11. As shown in Fig. 3, guide means 14 are preferably applied, which extend between the effective area E3 of the conveyor unit 3 and the magnetic effective area E2 of the electromagnetic transport unit 2. The guide means 14 preferably support the shuttle 11 as it is located in the hand over position x₁.

After the shuttle 11 is handed over into the magnetic effective area E2 of the electromagnetic transport unit 2, wherein the shuttle 11 is just in the magnetic effective area E2, the position x₂ of the shuttle 11 in the magnetic effective area E2 is determined by the electromagnetic transport unit 2.

As shown in Fig. 1, the shuttle 11 is moved along the magnetic effective area E2 and is handed over to another conveyor unit 3. In this case, the electromagnetic transport unit 2 conveys the shuttle 11 at least partially out of the magnetic effective area E2 and at least partially into the effective area E3 of the other conveyor unit 3, in that the other conveyor unit 3 can take over the shuttle 11 and in that the shuttle 11 is further conveyed in the effective area E3 by the other conveyor unit 3. During handing over the shuttle 11, the shuttle 11 at least temporarily adapts a hand over position x₁, wherein the shuttle 11 is at least temporarily in the magnetic effective area E2 of the electromagnetic transport unit 2 and in the effective area E3 of the other conveyor unit 3, as shown in the figures. The hand over position x₁ of the shuttle 11 is determined by the conveyor sensor unit 13 of the other conveyor unit 3, by the electromagnetic transport unit 2, or both. When the shuttle 11 is just in the effective area E3 of the other conveyor unit 3, the position x₃ is determined by the conveyor sensor unit 13 of the other conveyor unit 3.

Along the transport system 1, for example, in the magnetic effective area E2 and/or in the effective area E3, a number of process stations (not shown) can be arranged, wherein in said process stations certain manipulations on the shuttle 11 or on the item unit arranged on the shuttle 11 can take place. Furthermore, the shuttle 11 can be stopped at a process station, in order to enable a certain manipulation, wherein as the shuttle 11 is not moving, the position can be determined as well. For example, the item unit could be processed or transferred to another shuttle 11. Preferably a trigger position is defined in the magnetic effective area E2 of the electromagnetic transport unit 2 and/or in the effective area E3 of the conveyor unit 3 and/or in the hand over position, wherein if the determined position of the shuttle 11 corresponds to said trigger position, an action is induced, preferably an electric or logical signal is generated. For example, as the determined position of the shuttle 11 corresponds to the trigger position, the signal which is generated engages a manipulation on an item unit conveyed by the shuttle 11 at a process station.

Furthermore, the transport system 1 preferably comprises an energy supply unit (not shown). More preferably, the energy supply unit supplies the electromagnetic transport unit 2, the conveyor unit 3 and the control unit 10 of the transport system 1. Of course, the energy supply unit can comprise separated energy supplies, which are designed to supply said components of the transport system 1 individually.

Due to the enabled determination of the position of the shuttle 11 along different conveyor types of the transport system 1, an accurate evaluation of certain shuttle parameters, like shuttle milage, shuttle runtime, wear, etc. is enabled. Preferably the control unit 10 or an evaluation unit of the transport system evaluates said shuttle parameter. Therefore, an identification is preferably assigned by the control unit 10 to the individual shuttle 11 as the shuttles 11 are moved along the transport system 1, wherein the determined shuttle parameters can be assigned to the individual shuttle 11.

Furthermore, as the position of the shuttle 11 is acquired along the different conveyor types of the transport system 1, errors in the operation of said transport system 1 can be recognized accurately and fast. For example, stalling shuttles 11 or derailed shuttles 11 can be determined.

Additionally, the determined positions can be used by the control unit 10 of the transport system 1 for controlling movement of the shuttle 11 along said transport system 1. For example, since the position of the shuttle 11 is known on the conveyor unit 3, as the shuttle 11 is moved into the hand over position by the conveyor unit 3, the drive coils of the stator 22 of the electromagnetic transport unit 2 in the area adjacent to the hand over position can be energized (activated) prior to the arrival of the shuttle 11 in the hand over position, in order to enable a consistent and reliable hand over of the shuttle 11 from the effective area E3 to the magnetic effective area E2. Furthermore, the known shuttle position can be used to predict the time of arrival of the shuttle 11 at a process station. In that way, e.g., slow processes can be prepared pre arrival of the shuttle 11 to be begin with the process when the shuttle 11 arrives at the process station.

The position of the at least one shuttle 11 determined in accordance to the invention is used for operating the transport system 1. For example, the determined position is used by the control unit 10 of the transport system 1 to monitor movement of said shuttle 11 along the transport system 1 in order to know at each point in time the position of the shuttle 11. This can be used by the control unit 10 to control or implement a process flow with the transport system 1, by moving a plurality of shuttles 11, carrying items, in a desired way. Furthermore, the achieved traceability of the shuttle 11 can be used for quality management processes. The determination of the absolute position of the shuttle 11 with respect to a reference point of the transport system 1 is enabled, since both the sensor information of the electromagnetic transport unit 2 and the sensor information of the conveyor unit 3 are available.

In addition, a movement trajectory of at least one shuttle 11 present in the magnetic effective area E2 of the electromagnetic transport unit 2 may be adapted according to the determined position of at least one shuttle 11 in the effective area E3 on the conveyor unit 3. Preferably, the control unit 10 uses the determined position of the at least one shuttle 11 in the effective area E3 of the conveyor unit 3 to control a movement of at least one shuttle 11 present in the magnetic effective area E2 of the electromagnetic transport unit 2. In that way a dependency of the movement of shuttles 11 in the magnetic effective area E2 of the electromagnetic transport unit 2 with respect to the movement of shuttles 11 in the effective area E3 of the conveyor unit 3 can be enabled. The movement may be defined as a direction of movement (path) and a movement speed (dynamics) of the at least one shuttle 11.

For example, if shuttles 11 are handed over from more than one conveyor unit 3 to the magnetic effective area E2 of the electromagnetic transport unit 2, optimization methods could be used in generating the movement trajectories of the shuttles 11 in the magnetic effective area E2 of the electromagnetic transport unit 2 based on the determined positions of the shuttles 11 in the effective areas E3 on the conveyor units 3 in order to increase efficiency of manufacturing processes (e.g., planning arrival times of shuttles 11 at a setpoint position).

Furthermore, due to said dependency, collisions of shuttles 11 can be avoided. For example, a shuttle 11 is present in the magnetic effective area E2 of the electromagnetic transport unit 2 and another shuttle 11 is conveyed in the effective area E3 of the conveyor unit 3. Before handing over the shuttle 11 from said effective area E3 of the conveyor unit 3 to the magnetic effective area E2, the movement of the shuttle 11 present in the magnetic area E2 is adapted, in that the handed over shuttle 11 can be moved into the magnetic effective area E2 without colliding with the shuttle 11 already present in the magnetic effective area E2 of the electromagnetic transport unit 2. However, it is also possible to adapt the movement of the shuttle 11 present in the magnetic effective area E2 before it is handed over to the effective area E3 of the conveyor unit 3, in order to avoid a collision with a shuttle 11 already present in the effective area E3 of the conveyor unit 3. In that way the efficiency and safety of transport system 1 is increased.

## Claims

1. Method for determining a position of at least one shuttle (11) of a transport system (1) comprising an electromagnetic transport unit (2) and a conveyor unit (3), wherein the electromagnetic transport unit (2) interacts with the at least one shuttle (11) in a magnetic effective area (E2) of the electromagnetic transport unit (2) in order to move the at least one shuttle (11) in said magnetic effective area (E2), wherein the position of the at least one shuttle (11) in the magnetic effective area (E2) of the electromagnetic transport unit (2) is determined by the electromagnetic transport unit (2), wherein the conveyor unit (3) interacts with the at least one shuttle (11) in an effective area (E3) of the conveyor unit (3) in order to move the at least one shuttle (11) in said effective area (E3), **characterized in that** a conveyor sensor unit (13) is provided in the conveying unit (3), **in that** the at least one shuttle (11) is handed over from the effective area (E3) of the conveyor unit (3) to the magnetic effective area (E2) of the electromagnetic transport unit (2) or vice versa, wherein during handing over the at least one shuttle (11), the at least one shuttle (11) is at least temporarily in the effective area (E3) of the conveyor unit (3) and in the magnetic effective area (E2) of the electromagnetic transport unit (2), wherein the position of the at least one shuttle (11) is determined by the conveyor sensor unit (13) or by the electromagnetic transport unit (2) **and in that** when the at least one shuttle (11) is just in the effective area (E3) of the conveyor unit (3), the position of the at least one shuttle (11) in the effective area (E3) of the conveyor unit (3) is determined by the conveyor sensor unit (13) .

2. Method according to claim 1, **characterized in that** the electromagnetic transport unit (2) moves the at least one shuttle (11) to the effective area (E3) of the conveyor unit (3) or the conveying unit (3) moves the at least one shuttle (11) to the magnetic effective area (E2) of the electromagnetic transport unit (2), in order to hand over the at least one shuttle (11).

3. Method according to claim 1 or 2, **characterized in that** the position of the at least one shuttle (11) in the magnetic effective area (E2) is determined with a stator sensor unit (12) of the electromagnetic transport unit (2) that measures the position of the at least one shuttle (11) in said magnetic effective area (E2).

4. Method according to claim 1 or 2, **characterized in that** a movement of the at least one shuttle (11) in the magnetic effective area (E2) is controlled by a control unit (10) of the electromagnetic transport unit (2) **in that**, for controlling the movement, the control unit (10) receives a position setpoint value and position actual value and calculates a value of a manipulated variable from the difference between the position setpoint value and the position actual value, wherein the calculated manipulated variable is used to control the electromagnetic transport unit (2) and **in that** the position setpoint value for the at least one shuttle (11) in the magnetic effective area (E2) is used as the position of the at least one shuttle (11) in said magnetic effective area (E2).

5. Method according to any of the preceding claims, **characterized in that** a movement of at least one shuttle (11) in the magnetic effective area (E2) is controlled by the control unit (10) depending on the determined position of at least one shuttle (11) in the effective area (E3) of the conveyor unit (3).

6. Transport system (1) comprising an electromagnetic transport unit (2) and a conveyor unit (3), wherein the transport system (1) further comprises at least one shuttle (11), wherein the electromagnetic transport unit (2) is provided to interact with the at least one shuttle (11) in a magnetic effective area (E2) of the electromagnetic transport unit (2) in order to move the at least one shuttle (11) in said magnetic effective area (E2) when the transport system (1) is operated, wherein the electromagnetic transport unit (2) determines the position of the at least one shuttle (11) in the magnetic effective area (E2) of the electromagnetic transport unit (2), wherein the conveyor unit (3) is provided to interact with the at least one shuttle (11) in an effective area (E3) of the conveyor unit (3) in order to move the at least one shuttle (11) in said effective area (E3) when the transport system (1) is operated, **characterized in that** a conveyor sensor unit (13) is provided in the conveying unit (3), **in that** the transport system (1) is arranged to hand over the at least one shuttle (11) from the effective area (E3) of the conveyor unit (3) to the magnetic effective area (E2) of the electromagnetic transport unit (2) or vice versa, wherein during handing over the at least one shuttle (11), the at least one shuttle (11) at least temporarily adapts a hand over position in which the at least one shuttle (11) is partly in the effective area (E3) of the conveyor unit (3) and partly in the magnetic effective area (E2) of the electromagnetic transport unit (2), wherein the position of the at least one shuttle (11) is determined in the hand over position by the conveyor sensor unit (13) or by the electromagnetic transport unit (2) **and in that** when the at least one shuttle (11) is just in the effective area (E3) of the conveyor unit (3), the position of the at least one shuttle (11) in the effective area (E3) of the conveyor unit (3) is determined by the conveyor sensor unit (13).

7. Transport system (1) according to claim 6, **characterized in that** the electromagnetic transport unit (2) is provided to move the at least one shuttle (11) to the effective area (E3) of the conveyor unit (3) or the conveying unit (3) is provided to move the at least one shuttle (11) to the magnetic effective area (E2) of the electromagnetic transport unit (2), in order to hand over the at least one shuttle (11).

8. Transport system (1) according to claim 6 or 7, **characterized in that** the electromagnetic transport unit (2) is designed as long stator linear motor or a short stator linear motor or planar motor, wherein the electromagnetic transport unit (2) comprises a stator (22), which forms the magnetic effective area (E2) of the electromagnetic transport unit (2) to move the at least one shuttle (11).

9. Transport system (1) according to any of the claims 6 to 8, **characterized in that** the conveyor unit (3) is designed as continuous conveyor, preferably as conveyor belt or chain conveyor, wherein the conveyor unit (3) comprises a circulating conveying means (33), which forms the effective area (E3) of the conveyor unit (3) to move the at least one shuttle (11).
